# EUROPEAN PATENT APPLICATION

(11) **EP 1 116 901 A2**
(43) Date of publication of application: **18.07.2001**
(21) Application number: 01100516.2
(22) Date of filing: 09.01.2001
(51) Int. Cl.: F16H 57/08

(54) **Planetary gear reduction mechanism with tapered tooth end**

(30) Priority: 17.01.2000 JP 2000007851
(71) Applicant: Denso Corporation, Kariya-city, Aichi-pref., 448-8661 (JP)
(72) Inventor: Niimi, Masami, c/o Denso Corporation, Kariya-city, Aichi-pref., 448-8661 (JP); Katoh, Masahiro, c/o Denso Corporation, Kariya-city, Aichi-pref., 448-8661 (JP); Wakahara, Yasuyuki, c/o Denso Corporation, Kariya-city, Aichi-pref., 448-8661 (JP)
(74) Representative: Kuhnen & Wacker

(57) **Abstract**

A planetary gear speed reduction mechanism (100) has a sun gear (1), an internal gear (2) and a plurality of planetary gears (3) disposed between both gears (1, 2). Each tooth (10) of the sun gear (1) has a tapered portion (11) formed at a front end thereof such that the tapered portion (11) tapers off in the axial direction. The tapered portion (11) has a pair of symmetrical inclined surfaces (11b) whose width is tapered off in the circumferential direction from a tooth surface (10b) of each tooth (10) and a tapered surface (11a) whose peripheral surface is tapered off in the radial direction from an end of a tooth crest surface (10a). In the process of inserting the sun gear (1) into a space among the planetary gears (3), the sun gear (1) is inserted thereinto under the guide of the inclined surface (11b) by slightly rotating the sun gear (1).

## Description

The present invention relates to a planetary gear reduction mechanism.

It is known that, planetary gear speed reduction mechanisms can be used as gear speed increase mechanisms by reversing an input shaft and an output shaft. Thus, it is possible to use the planetary gear speed reduction mechanism as the gear speed increase mechanism.

In the conventional planetary gear speed reduction mechanisms, a cut-off end surface is formed on an end portion of a planetary gear and that of a sun gear which abuts the end portion of the planetary gear when the sun gear is inserted into the space among a plurality of planetary gears rotatably supported at the inner side of an internal gear.

In the conventional mechanism, an assembly work is performed by inserting in the axial direction the sun gear into the space among a plurality of planetary gears. Unless the sun gear is positioned at its correct rotational angular position in the assembly work, end surfaces of both gears abutting each other contact face to face. If an assembly operator forces the sun gear into the space among a plurality of planetary gears in this state, the sun gear and/or the planetary gear may be broken. Thus, the sun gear is required to be rotated slowly around its axis to find a correct rotational angular position and then inserted into the space among the planetary gears.

The maximum rotational angle of the sun gear required to rotate to a proper rotational angular position at which the sun gear engages the planetary gear is as large as 30° when the number of teeth of the sun gear is 12. It is as large as 45° when the number of teeth of the sun gear is 8. Because it is necessary to precisely adjust the rotational angular position of the sun gear, the rotational angular velocity of the sun gear in finding the proper rotational angular position thereof should be slow. In an assembling work to be performed by an assembly apparatus currently used, the proper rotational angular position is found by rotating the sun gear slowly.

Thus, the conventional mechanism has an inconvenience that it takes long to find the proper rotational angular position of the sun gear in an assembly time.

Therefore, it is an object of the present invention to provide a planetary gear speed reduction mechanism, which can be assembled easily in a short time and in a reduced number of assembly processes.

According to the present invention, a planetary gear speed reduction mechanism comprises a sun gear, an internal gear coaxial with the sun gear, and a plurality of planetary gears disposed between the sun gear and the internal gear. A tooth of at least one of the sun gear, the internal gear and the planetary gears has a tapered portion formed at its one axial end which faces other gears when assembled. The tapered portion is tapered off in the axial direction.

Preferably, the planetary gear speed reduction mechanism is provided in a starter for engines. The sun gear is formed on a rotary shaft of a motor and the planetary gears are coupled with an output shaft. The tapered portion is formed on both axial ends of the tooth when the planetary gears are configured to have the tapered portion.

The above and other objects, features and advantages of the present invention will become more apparent from the following detailed description made with reference to the accompanying drawings. In the drawings:
Fig. 1 is a half-sectional view showing a planetary gear speed reduction mechanism mounted in a starter device according to a first embodiment of the present invention;
Fig. 2 is a perspective view showing a sun gear having a tapered portion according to the first embodiment;
Fig. 3 is a front view showing the sun gear according to the first embodiment;
Fig. 4 is a side view showing the sun gear according to the first embodiment and a planetary gear;
Fig. 5 is a front view showing the sun gear according to the first embodiment and the planetary gear;
Fig. 6 is a perspective view showing the sun gear having a tapered portion according to a first modification of the first embodiment; and
Fig. 7 is a perspective view showing the sun gear having a tapered portion according to a second modification of the first embodiment.

The present invention will be described in detail with reference to various embodiments and modifications thereof.

### (First Embodiment)

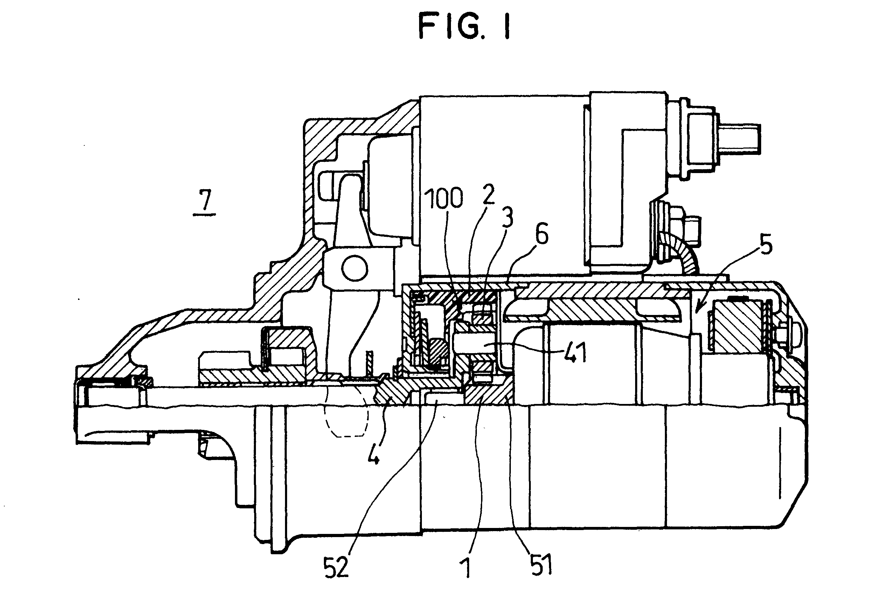

Referring first to Fig. 1, a planetary gear speed reduction mechanism 100 of a first embodiment is incorporated in a starter 7 for starting an engine. The planetary gear speed reduction mechanism 100 is used to reduce the speed of an output of the shaft of a starter motor 5 and transmits the reduced output to the output shaft 4.

The planetary gear speed reduction mechanism 100 has a sun gear 1, an internal gear 2 disposed coaxially with the sun gear 1, and three planetary gears 3 engaging both gears 1, 2. The sun gear 1 is a spur gear formed at a projected portion of a rotor shaft (armature shaft) 51 of the starter motor 5. The tooth surface of the sun gear 1 is formed by cold forging. An axial front end portion 52 of the rotor shaft 51 is rotatably supported by an oiless bearing held on the inner peripheral surface of the output shaft 4. The internal gear 2 is a spur gear made of resin and held at the inner side of a frame 6 of the planetary gear speed reduction mechanism 100. The frame 6 is fixed to a motor frame serving as a yoke of a stator of the starter motor 5. Between the sun gear 1 and the internal gear 2, the three planetary gears 3 which are spur gears are disposed at regular intervals in the circumferential direction of the sun gear 1 and the internal gear 2 in a manner meshed with both gears 1, 2. Each planetary gear 3 is rotatably supported by a supporting pin 41 to transmit the output of the rotor shaft 51 to the output shaft 4 through the supporting pin 41 by its revolution around the sun gear 1.

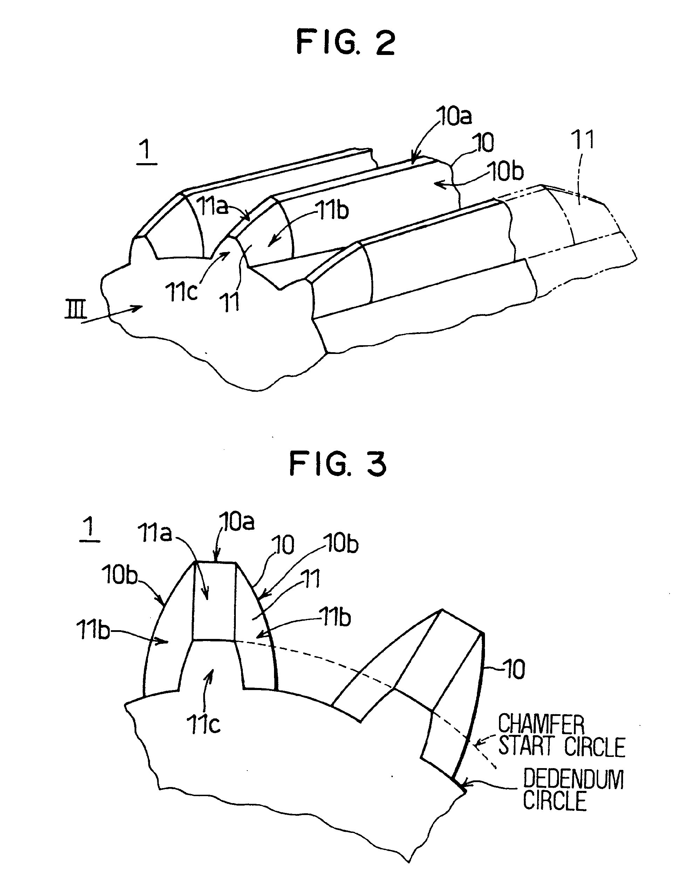

As shown in Fig. 2, the sun gear 1 formed on the rotor shaft 51 has a tapered portion 11 formed at one axial end (front end portion) of a tooth 10 thereof and abuts the planetary gears 3 in an assembly process. The tapered portion 11 tapers off in the axial direction. That is, as shown in Fig. 2 and Fig. 3, the tapered portion 11 of each tooth 10 of the sun gear 1 has a pair of symmetrical inclined surfaces 11b whose width is tapered off in the circumferential direction from a tooth surface 10b of each tooth 10 and a tapered surface lla whose peripheral surface is tapered off in the radial direction from an end of a tooth crest surface (addendum surface) 10a. The tapered surface 11a is formed as a part of the conical surface of a conic having a half vertical angle of about 45°.

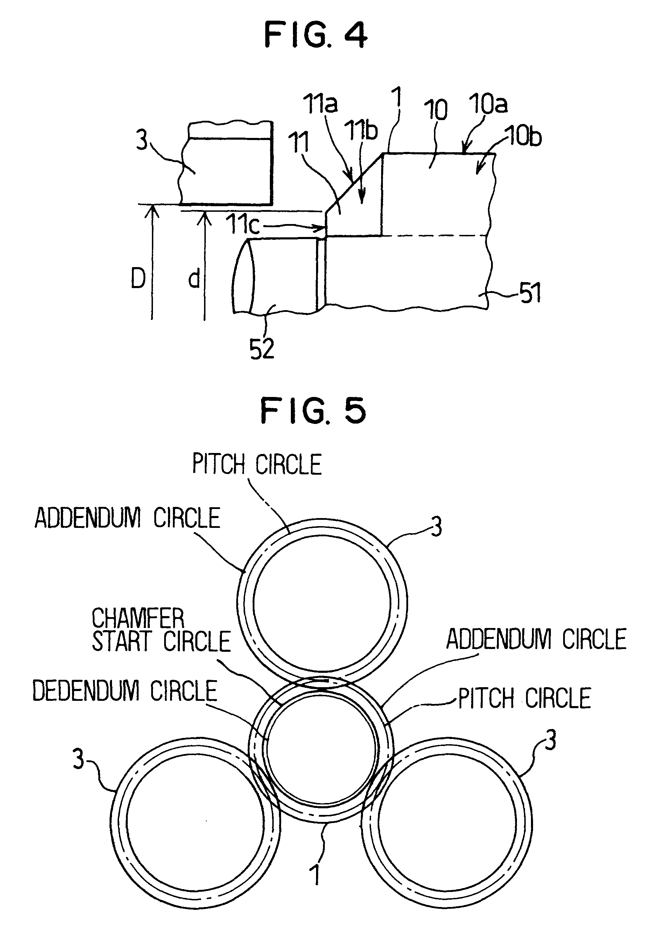

The tapered portion 11 has a front end surface 11c having a small outer diameter to prevent the tapered portion 11 from contacting the end surface of each of the three planetary gears 3 when the tapered portion 11 abuts it in the assembly process. That is, as shown in Fig. 4, the diameter d of a chamfer start circle of the sun gear 1 is smaller than the inner diameter D formed by an addendum circle of each planetary gear 3. Therefore, in inserting the sun gear 1 of the rotor shaft 51 into the space among the three planetary gears 3, initially, the tapered surface lla of the tapered portion 11 of the sun gear 1 contacts an axial end portion of the planetary gear 3 when the sun gear 1 is located at a rotational angular position at which the addendum of the sun gear 1 and that of each planetary gear 3 contact each other.

In the first embodiment, unlike the sun gear 1, the tapered portion 11 is not formed on the internal gear 2 or each planetary gear 3.

In a process of assembly, that is, in the process of inserting the sun gear 1 into the space among the three planetary gears 3 by an urging force, there are the following three cases in the mode of contact between the sun gear 1 and the planetary gear 3.

In the first case, as shown in Fig. 4, the tapered surface lla of the tapered portion 11 of the sun gear 1 contacts an axial edge portion comprising the tooth crest surface of each planetary gear 3 and its end surface. In this case, because the tapered surface lla contacts the end portion of each planetary gear 3 with a sweep-back angle of about 45°, a repulsive force acts in the radially outward direction between the sun gear 1 and each planetary gear 3. As a result, each planetary gear 3 is pressed by the sun gear 1 in the centrifugal direction and contacts the tooth of the internal gear 2 existing radially outside thereof without a gap between the tooth of the planetary gear 3 and the tooth of the internal gear 2. On the other hand, the sun gear 1 is pressed centripetally from three directions by the three planetary gears 3 to match (centering) the axis of the sun gear 1 with the center of the three planetary gears 3, as shown in Fig. 5. That is, a play formed in the periphery of each planetary gear 3 concentrates on the side of the sun gear 1. In addition, the width of the front end portion of the sun gear 1 becomes circumferentially narrow owing to the formation of the inclined surfaces 11b at both sides of the tapered portion 11. Accordingly, the sun gear 1 is placed in a state in which it can be inserted into the space among the planetary gears 3 in a considerably wide rotational angle range.

Therefore, the rotational angular position at which the sun gear 1 engages the planetary gear 3 is found in this state by rotating the sun gear 1. Immediately after the tapered surface lla of the sun gear 1 slips off from the addendum (more accurately, edge portion comprising of the tooth crest surface and the end surface) of the planetary gear 3, the insertion of the sun gear 1 can be accomplished. That is, as shown in Figs. 2 and 4, the circumferential width of the tapered surface 11a which contacts the addendum of the planetary gear 3 is almost equal to that of the tooth crest surface 10a of the tooth 10. With a slight rotational angle of the sun gear 1, the tapered surface lla of the sun gear 1 slips off from the addendum of the planetary gear 3. Accordingly, the sun gear 1 can be inserted into the space among the planetary gears 3.

At this time, the urging force for inserting the sun gear 1 into the space among the planetary gears 3 acts on the sun gear 1. Thus, as the sun gear 1 is inserted into the space among the planetary gears 3, the sun gear 1 rotates normally and engages each planetary gear 3 completely. That is, the inclined surface 11b forming the side surface of the tapered portion 11 of the sun gear 1 slidably contacts the edge of the tooth of the planetary gear 3 and guides the sun gear 1 (and/or planetary gear 3) toward the rotational angular position at which the sun gear 1 engages each planetary gear 3 by rotating it. Consequently, as the sun gear 1 is inserted into the space among the planetary gears 3 by the guide action of the inclined surface 11b, the sun gear 1 is guided normally to the rotational angular position at which the sun gear 1 engages each planetary gear 3 and is inserted to a predetermined depth in the acxial direction with the sun gear 1 in engagement with each planetary gear 3.

As described above, the tapered surface lla provides a play of the planetary gear 3 to concentrate on the side of the sun gear 1. In addition, the small width of the tapered surface lla greatly widens the range of the rotational angular position at which the sun gear 1 starts to engage the planetary gear 3. Therefore, in rotating the sun gear 1 to find the rotational angular position at which the sun gear 1 engages the planetary gear 3, the sun gear 1 does not fail to skip the engaging position, even though the sun gear 1 is rotated at a considerably high angular velocity. Consequently, not only the sun gear-rotating angular range is narrow, but also the angular velocity of the sun gear 1 can be increased in its rotation. Thus, the sun gear 1 can be inserted into the space among the planetary gears 3 in a much shorter time than that required in the conventional sun gear to be inserted.

In the second case, as the sun gear 1 is inserted into the space among the planetary gears 3 earlier than the other portions of the planetary gear 3, the inclined surface 11b of the tapered portion 11 of the sun gear 1 slidably contacts the axial edge portion of the tooth of the planetary gear 3. In this case, similarly to the latter half of the operation of the above first case, as the insertion of the sun gear 1 proceeds by the guide action of the inclined surface 11b, the sun gear 1 is guided normally to the rotational angular position at which the sun gear engages each planetary gear 3. Consequently, the sun gear 1 is inserted to the predetermined depth in the axial direction with the sun gear 1 in engagement with each planetary gear 3, without rotating the sun gear 1 to find the rotational angular position at which the insertion of the sun gear 1 can be accomplished by rotating the sun gear 1.

In the third case, the rotational angular position of the sun gear 1 is initially located at the position where the sun gear 1 engages the planetary gear 3. Thus, the sun gear 1 is inserted into the space among the planetary gears 3 without rotating the sun gear 1. In this case, the sun gear 1 can be inserted into the space among the planetary gears 3 without the action of the tapered portion 11. Such a convenient case rarely occurs and thus is not required to be considered much.

As described above in detail, according to the planetary gear speed reduction mechanism 100 of the first embodiment, the process of inserting the sun gear 1 into the space among planetary gears 3 can be performed with ease and in a short time, and the number of assembly processes can be reduced. Accordingly, productivity can be improved. This is because owing to the action of the tapered portion 11 forming the axial front end portion of the tooth 10 of the sun gear 1, in inserting the sun gear 1 into the space among the three planetary gears 3, the registration of the rotational angular position of the sun gear 1 can be accomplished almost instantaneously.

The tooth 10 of the sun gear 1, inclusive of the tapered portion 11, is formed by cold forging. Thus, if a forging die for forming the tooth 10 and the tapered portion 11 as one piece is prepared, the manufacturing cost hardly increases. There is a sun gear-manufacturing method of forming the inclined surface 11b at both sides of the tapered portion 11 by cold forging and the conic tapered surface 11a with a lathe. However, the manufacturing method, of the first embodiment, of forming the tapered portion 1 inclusive of the tapered surface 11a by cold forging is desirable in view of the manufacturing cost.

In the first embodiment, only the sun gear 1 has the tapered portion 11, whereas the planetary gears 3 and the internal gear 2 have the conventional construction. Therefore, the modification of only the forging die for the sun gear 1 is necessary and the modification cost is minimized.

### (Modifications of First Embodiment)

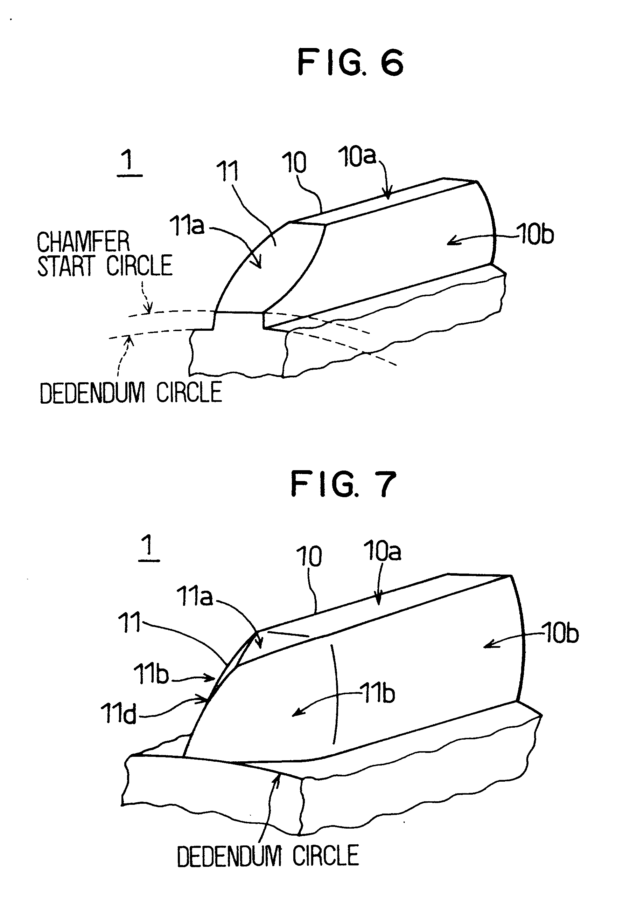

As a first modification of the first embodiment, as shown in Fig. 6, it is possible to embody the planetary gear speed reduction mechanism 100 having the sun gear 1 in which the axial front end portion of the tooth 10 is formed with the tapered portion 11 having the conic tapered surface lla and not having the inclined surfaces 11b at both sides thereof. A chamfer start circle which the front edge of the tapered surface lla forms has a sufficiently small diameter, similarly to the first embodiment. That is, if the tooth of the planetary gear 3 and that of the sun gear 1 abut each other in inserting the sun gear 1 into the space among the three planetary gears 3, the tapered surface lla of the sun gear 1 contacts the planetary gear 3.

In the first modification, the tapered portion 11 can be formed on the tooth 10 by forming the tapered surface lla by lathe machining. That is, the sun gear 1 is formed by the conventional method, and finally, a sun gear-manufacturing method of finishing the tapered surface 11a with a lathe can be adopted. Therefore, in the case where the sun gear 1 is formed by forging as in the case of the first embodiment, it is unnecessary to manufacture a forging die. Thus there is a possibility that the cost of the manufacturing equipment can be reduced. Similarly, in the case of adopting a manufacturing method of precisely machining the sun gear with a gear cutting machine such as a gear hobbing machine and a pinion cutter, the tapered surface 11a can be formed with a lathe before or after gear cutting is performed. Thus, the sun gear can be manufactured easily.

Even though the tapered portion 11 has only the tapered surface 11a in the first modification, it is possible to obtain the sun gear-centering action and the action of concentrating the play of the planetary gear on the periphery of the sun gear 1. Further, the edge portion which the tapered surface lla and the tooth surface 10b form guides the sun gear 1 normally and rotates it such that the sun gear engages the planetary gear. Thus, it is possible to obtain the guide action for the engagement between the sun gear 1 and the planetary gear 3.

Thus, according to the first modification, the effect similar to that of the first embodiment can be obtained without changing the manufacturing equipment of the sun gear much.

As a second modification of the first embodiment, as shown in Fig. 7, it is possible to embody the planetary gear speed reduction mechanism 100 having the sun gear 1 whose tooth 10 is formed on the periphery thereof and whose axial front end portion is formed with the tapered portion 11 having a configuration similar to that of the bottom of the stem of a boat.

In the second modification, the tooth 10 of the sun gear 1, inclusive of the tapered portion 11, is formed by forging.

The inclined surfaces 11b at both sides of the tapered portion 11 are formed with a quadratic curved surface. The inclined surfaces 11b become narrower toward the front end portion thereof in the circumferential width thereof and are joined with each other at the front end portion thereof to form a front edge lid having a sweep-back angle. Therefore, when the tooth 10 of the sun gear 1 contacts the addendum of the planetary gear 3 in inserting the sun gear 1 into the space among the three planetary gears 3, the front edge lid of the sun gear 1 contacts the addendum of the planetary gear 3. Because the front edge lid of the sun gear 1 is rounded appropriately, a recess is hardly formed thereon when the sun gear 1 contacts the planetary gear 3.

The tapered surface 11a is continuous with the tooth crest surface 10a and is centripetal toward its front end portion. The tapered surface lla is not necessarily formed, but may be formed as an extended surface in the same plane as the tooth crest surface 10a or the front edge lid of the inclined surface 11b may be extended to the tooth crest surface 10a by eliminating the tapered surface lla.

If the rotational angular position is not appropriate in inserting the sun gear 1 into the space among the three planetary gears 3, the sun gear 1 contacts the addendum of the planetary gear 3 at the front edge lid having the sweep-back angle and forces the planetary gear 3 outward, while the sun gear 1 being centered. The maximum angle of the sun gear 1 to be rotated to find the rotational angular position at which the sun gear 1 is inserted into the space among the three planetary gears 3 corresponds to an angle of the tooth crest surface of the planetary gear 3. Thus, the angle of the sun gear 1 to be rotated is minimized. Therefore, in this case, the sun gear 1 is inserted into the space among the three planetary gears 3 by rotating the sun gear 1 slightly.

Regardless of whether the front edge lid of the tapered portion 11 contacts the planetary gear 3 initially or the inclined surface 11b thereof contacts initially, once the sun gear 1 is inserted into the space among the planetary gears 3, both gears 1 and 3 engage each other normally. That is, under the guidance of the inclined surface 11b, the sun gear 1 (and/or the planetary gear 3) rotates to an appropriate rotational angular position and the tooth 10 of the sun gear 1 and that of the planetary gear 3 engage each other.

Thus, according to the second modification, the effect of the first embodiment can be enhanced to a higher extent.

As a further modification, it is possible to embody the planetary gear speed reduction mechanism 100 in which, regardless of whether the tapered surface lla is formed or not, the inclined surface 11b at both sides of the tapered portion 11 is formed with a primary curved surface or a plane and the tapered portion 11 is wedge-shaped. Such a modification provides an effect similar to that of the first embodiment or that of the second modification.

As a third modification of the first embodiment, it is possible to embody the planetary gear speed reduction mechanism 100 in which the tapered portion is formed not only on the front end portion of the sun gear 1 but also on the rear end portion of each planetary gear 3. According to the third modification, the sun gear 1 and the planetary gears 3 are fitted on each other with the respective tapered portions in abutment with each other. Thus, the sun gear insertion process can be performed more easily. Accordingly, the productivity can be improved to a higher extent.

In particular, in the case where the tapered portion 11 (see Fig. 7) of the above second modification is formed on both gears 1, 2, there is a very low probability that the front end portions lid of the tapered portions 11 of both gears 1, 2 contact each other. Therefore, it is almost unnecessary to find the rotational angular position at which the sun gear 1 is inserted into the space among the planetary gear 3 by rotating the sun gear 1. Consequently, the third modification has the effect of improving the assembly productivity to a higher extent in inserting the sun gear 1 into the space among the planetary gears 3.

In the third modification, a modification of not forming the tapered portion 11 on the sun gear 1 can be made. Although the modification is not as effective as the first embodiment, depending on the configuration of the tapered portion of the planetary gear 3, operation and effect similar to that of the first embodiment or that of the first and second modifications thereof can be obtained.

As a fourth modification of the first embodiment, it is possible to have a construction in which all teeth of each planetary gear 3 have a tapered portion formed at both axial end portions thereof as shown by a dot-and-chain line in Fig. 2. According to the fourth modification, it is possible to improve not only the productivity in the process of inserting the sun gear 1 into the space among the three planetary gears 3, but also the productivity in the process of mounting each planetary gear 3 at a predetermined position with each planetary gear 3 in engagement with the internal gear 2.

Similarly to the above third modification, the fourth modification has the effect of improving the productivity in inserting the sun gear 1 into the space among the three planetary gears 3 to a higher extent by forming the tapered portion 11 on the sun gear 1. It is easier to perform the process of mounting planetary gears 3 on the internal gear 2, with the planetary gears 3 in engagement with the internal gear 2 by forming the tapered portion on the end surface of each tooth of the internal gear 2. In the case where the internal gear 2 is formed by molding resin, it is easy to form the tapered portion on the internal gear 2 by modifying a molding die.

### (Second Embodiment)

The planetary gear speed reduction mechanism 100 of a second embodiment of the present invention has a construction (not shown) in which the internal gear 2 has the tapered portion formed at one axial end of its tooth abutting each of the planetary gears 3 in the assembly process such that the tapered portion is tapered off in the axial direction.

Therefore, the operation almost the same as that of the above first embodiment can be obtained between the internal gear 2 and each planetary gear 3. Thus, it is easy to perform the process of mounting each planetary gear 3 on the internal gear 2 by engaging each planetary gear 3 with the inner side of the internal gear 2. Consequently, it is possible to reduce the number of processes of mounting each planetary gear 3 on the internal gear 2 by engaging each planetary gear with the internal gear 2. Accordingly, the productivity of the planetary gear speed reduction mechanism 100 can be improved. In the case where the internal gear 2 is molded from resin as in the case of a starter, it is easy to form the tapered portion on the internal gear 2 by modifying a molding die.

Thus, according to the planetary gear speed reduction mechanism 100 of the second embodiment, it is possible to reduce the number of processes of mounting each planetary gear 3 on the internal gear 2 and improve the productivity in performing the assembly process different from that of the first embodiment.

### (Modifications of Second Embodiment)

As a first modification of the second embodiment, in addition to the internal gear 2, it is possible to embody the planetary gear speed reduction mechanism 100 having a construction in which the planetary gear 3 has also a tapered portion formed at both ends of its tooth such that the tapered portion is tapered off in the axial direction. In the first modification, it is easier to mount each planetary gear 3 on the internal gear 2. It is also easy to insert the sun gear 1 into the space among the planetary gears 3. Accordingly, the first modification of the second embodiment has the effect of improving the productivity of planetary gear speed reduction mechanism 100 to a higher extent in addition to the effect of the above second embodiment.

It is also possible to embody a construction in which the tapered portion 11 similar to that of the first embodiment and that of some of the modifications of the first embodiment is also formed on the front end portion of the sun gear 1. The construction has the effect of facilitating the insertion of the sun gear 1.

As a second modification of the second embodiment, it is possible to embody the planetary gear speed reduction mechanism 100 having a construction in which the tapered portion 11 similar to that of the first embodiment and that of each modification of the first embodiment is also formed on the front end portion of the tooth of the sun gear 1. In the second modification, the insertion of the sun gear 1 is facilitated. In addition, because the tapered portion is not formed on the tooth of each planetary gear 3, the effective tooth width of the planetary gear 3 is widened. Thus the strength of the planetary gear 3 against a load is not reduced.

Therefore, according to the second modification, it is possible to reduce the number of processes of assembling the planetary gear speed reduction mechanism and thus improve the productivity thereof. In addition, the second modification has the effect of preventing reduction of a transmittable maximum power of the planetary gear speed reduction mechanism.

### (Third Embodiment)

The planetary gear speed reduction mechanism 100 of a third embodiment of the present invention has a construction (not shown) in which the tooth of each planetary gear 3 has a tapered portion formed at both axial ends thereof such that the tapered portion is tapered off in the axial direction. That is, each planetary gear 3 has the tapered portion formed by rounding its tooth at one end thereof abutting the internal gear 2 and at the other end thereof abutting the sun gear 1. On the other hand, the tapered portion is formed on neither the sun gear 1 nor the internal gear 2.

Thus, an effect similar to that of the second embodiment can be obtained in mounting each planetary gear 3 on the internal gear 2. Further, an effect similar to that of the first embodiment can be obtained in inserting the sun gear 1 into the space among the planetary gears 3. Further, because the construction of the planetary gear 3 is different from that of the conventional one and because it is unnecessary to form the tapered portion on the sun gear 1 and the internal gear 2, it is unnecessary to modify the manufacturing equipment of the internal gear 2 and the sun gear 1.

Thus, the planetary gear speed reduction mechanism 100 of the third embodiment has the effect of greatly reducing the number of assembling processes and improving the productivity by merely modifying the manufacturing equipment of the planetary gear 3. As described above, because the tapered portion of each planetary gear 3 is formed by rounding both ends of the tooth, reduction of the effective tooth width of the planetary gear 3 is minimized.

The planetary gear speed reduction mechanism may be implemented in many other ways without departing from the spirit and scope of the present invention.

## Claims

1. A planetary gear speed reduction mechanism (100) comprising:
a sun gear (1);
an internal gear (2); and
a plurality of planetary gears (3) engaging both of the gears,
wherein a tooth (10) of at least one of the sun gear (1), the internal gear (2) and the planetary gears (3) has a tapered portion (11) formed at one axial end thereof which faces the other of the gears (1, 2, 3) when assembled, and
wherein the tapered portion (11) is tapered off in the axial direction toward the axial end.

2. A planetary gear speed reduction mechanism (100) as in claim 1, wherein:
the tapered portion (11) has an inclined surface (11b) whose width is tapered off in the circumferential direction from one of a tooth surface (10a) and a tapered surface (11c) whose peripheral surface is tapered off in the radial direction from an end of an addendum.

3. A planetary gear speed reduction mechanism (100) as in claim 1 or 2, wherein:
the tapered portion (11) has an axial end surface (11c) having an outer diameter (d) smaller than that of an addendum of the tooth (10) to prevent the tapered portion (11) from contacting an end surface of the other of the gears (1, 3) when the one and the other of the gears (1, 3) is assembled in the axial direction.

4. A planetary gear speed reduction mechanism (100) as in any one of claims 1 through 3, wherein:
the tapered portion (11) is formed only on the sun gear (1).

5. A planetary gear speed reduction mechanism (100) as in any one of claims 1 through 4, wherein:
the tapered portion (11) is formed on only one of the internal gear (2) and the planetary gears (3).

6. A planetary gear speed reduction mechanism (100) as in claim 5, wherein:
the tapered portion (11) is formed at both axial ends of the tooth (10) of each of the planetary gears (3).

7. A planetary gear speed reduction mechanism (100) as in claim 5, wherein:
the internal gear (2) is made of resin; and
the tapered portion (10) is formed on the internal gear (2).

8. A planetary gear speed reduction mechanism (100) as in any one of claims 1 through 6, wherein:
the sun gear (1) is formed on a rotary shaft of a motor (5); and
the planetary gears (3) are coupled with an output shaft (4) to rotate the output shaft (4) while revolving between the sun gear (1) and the internal gear (2).
